# FASCICULE DE BREVET EUROPEEN

(11) **EP 1 391 172 B1**
(45) Date de publication et mention de la délivrance du brevet: **09.05.2007**
(21) Numéro de dépôt: 03356120.0
(22) Date de dépôt: 06.08.2003
(51) Int. Cl.: A47J 42/56, A47J 43/07

(54) **Appareil électroménager de préparation culinaire comportant un outil rotatif et un double dispositif de sécurité amélioré**
Elektrisches Küchengerät mit rotierendem Werkzeug und verbesserter doppelter Sicherheitsvorrichtung
Electric kitchen-appliance with rotary tool and improved double safety device

(30) Priorité: 19.08.2002 FR 0210388
(43) Date de publication de la demande: 25.02.2004
(73) Titulaire: SEB S.A., 69130 Ecully (FR)
(72) Inventeur: Macabiau, Serge, 65310 Horgues (FR); Rouyer, Philippe, 65290 Juillan (FR); Noguez, Jean Michel, 65100 Lourdes (FR)
(74) Mandataire: Kiehl, Hubert

(56) Documents cités:
- WO-A-02/076273
- FR-A- 2 756 477

## Description

La présente invention se rapporte au domaine technique général des appareils électroménagers de préparation culinaire comportant un outil rotatif.

La présente invention concerne plus particulièrement, mais non exclusivement, les mini-hachoirs comportant un outil de travail coupant tournant dans un récipient de travail, dans lesquels l'outil est entraîné par un moteur agencé dans un boîtier disposé au dessus du récipient de travail.

Notamment, les mini-hachoirs peuvent comporter un interrupteur marche/arrêt disposé dans le boîtier et commandé par le contact d'une tige de transmission avec la partie supérieure du récipient de travail. Pour mettre en marche l'appareil l'utilisateur appuie sur le boîtier ou tourne le boîtier disposé sur le récipient. En alternative ou en complément un interrupteur peut être commandé par un bouton de commande agencé sur le boîtier.

Pour faciliter le nettoyage de tels appareils il a été proposé d'intercaler une pièce d'obturation entre le récipient et le boîtier moteur, se présentant généralement sous la forme d'une coupelle. La pièce d'obturation ferme la partie supérieure du récipient et comporte une ouverture présentant un diamètre légèrement supérieur à la tige de l'outil entraînée par le moteur. Ainsi les projections d'aliments atteignent la face inférieure de la pièce d'obturation, susceptible de passer au lave-vaisselle car dépourvue de parties électriques, et non la face inférieure du boîtier moteur.

Pour éviter le fonctionnement de l'appareil sans ladite pièce d'obturation, un interrupteur actionné par ladite pièce d'obturation est prévu dans le boîtier. Toutefois une telle disposition ne permet pas d'interdire totalement le fonctionnement de l'appareil en l'absence du récipient de travail, l'utilisateur pouvant assembler le boîtier moteur et la pièce d'obturation pour mettre en marche l'appareil.

Il a été proposé dans le document WO 96/22720 de réaliser une pièce d'obturation en forme de coupelle dont le bord supérieur présente une pluralité de portions latérales déformables. Le récipient de travail fermé par la coupelle repousse lesdites portions latérales et permet l'assemblage avec le boîtier moteur. La coupelle seule ne peut pas être assemblée avec le boîtier moteur, du fait de la venue en butée desdites portions latérales contre le boîtier moteur.

Il a été proposé dans le document WO 98/24350 ou le document FR 2 756 477 de réaliser un appareil comportant un récipient de travail verrouillé par une pièce d'obturation comportant une partie mobile permettant au dispositif de sécurité disposé dans le boîtier moteur supérieur de détecter la présence du récipient de travail.

L'une ou l'autre de ces réalisations permettent d'obtenir un appareil dont le fonctionnement est particulièrement sûr, puisque le dispositif de sécurité permet de détecter à la fois la présence du récipient de travail et la présence de la pièce d'obturation. Toutefois la pièce d'obturation, ou coupelle, doit faire l'objet de précautions particulières pour le nettoyage, du fait de la présence de pièces mobiles et/ou déformables. De plus, le récipient de travail comporte des moyens d'accrochage et/ou de verrouillage de la pièce d'obturation.

Il a été proposé dans la demande FR 01 03876 publiée sous la référence FR 2 822 364, ou dans le document WO 02/076273, de monter dans le boîtier moteur une bascule actionnée d'une part par la pièce d'obturation et d'autre part par le récipient de travail. Un tel dispositif permet d'offrir une sécurité satisfaisante. Toutefois la construction d'un tel dispositif est délicate à mettre au point, notamment lorsque le récipient de travail est réalisé dans un matériau présentant des dispersions de cotes importantes, tel que le verre. Ceci contribue à augmenter le coût de production d'un tel appareil.

L'objet de la présente invention est de proposer un appareil du type précité dont le fonctionnement soit particulièrement sûr, et dont la construction soit simplifiée.

Un autre objet de la présente invention est de proposer un appareil du type précité dont le nettoyage de la pièce d'obturation du récipient de travail soit facilité.

Un autre objet de la présente invention est de proposer un appareil du type précité dont le boîtier présente un encombrement limité et dont le fonctionnement soit particulièrement sûr.

Un autre objet de la présente invention est de proposer un appareil du type précité dont le fonctionnement soit particulièrement sûr, et dont le récipient de travail ne nécessite pas de précision dimensionnelle particulière.

Ces objets sont atteints avec un appareil électroménager de préparation culinaire comprenant un récipient de travail, une pièce d'obturation amovible du récipient de travail, un boîtier, disposé au dessus du récipient de travail, logeant un moteur prévu pour entraîner en rotation un outil disposé dans le récipient de travail, le moteur étant associé à des moyens de commande logés dans le boîtier, les moyens de commande comportant un interrupteur, un premier organe de détection prévu pour coopérer avec la pièce d'obturation, le premier organe de détection appartenant à un moyen de transmission susceptible de coopérer avec l'interrupteur pour autoriser le fonctionnement de l'appareil, du fait que les moyens de commande logés dans le boîtier comportent un deuxième organe de détection prévu pour coopérer avec le récipient de travail, le deuxième organe de détection appartenant à un moyen de verrouillage comportant un organe de blocage coopérant avec le moyen de transmission lorsque le deuxième organe de détection n'est pas sollicité, le moyen de verrouillage étant formé par un verrou monté mobile dans le boîtier contre un ressort de rappel. En d'autres termes, lorsque le deuxième organe de détection ne coopère pas avec le récipient de travail, l'organe de blocage coopère avec le moyen de transmission pour le bloquer et le moyen de transmission ne peut pas coopérer avec l'interrupteur pour autoriser le fonctionnement de l'appareil. Lorsque le deuxième organe de détection coopère avec le récipient de travail, l'organe de blocage libère le moyen de transmission et le moyen de transmission peut coopérer avec l'interrupteur pour autoriser le fonctionnement de l'appareil lorsque le premier organe de détection coopère avec la pièce d'obturation. Cette disposition présente l'avantage de désolidariser les mouvements des deux organes de détection. La construction du mécanisme de sécurité est rendue plus simple, et donc plus fiable. Cette disposition permet d'interdire le mouvement du moyen de transmission tant que le moyen de verrouillage n'a pas été actionné. Le moyen de verrouillage étant actionné par le récipient de travail, ce dispositif de sécurité est particulièrement sûr. Cette construction est particulièrement simple et économique.

Avantageusement, le moyen de transmission peut occuper une position passive dans laquelle l'interrupteur n'autorise pas le fonctionnement de l'appareil, et une position active instable dans laquelle l'interrupteur autorise le fonctionnement de l'appareil, et le moyen de verrouillage peut occuper une position stable dite de verrouillage et une position instable dite déverrouillée, l'organe de blocage étant susceptible d'entraver le déplacement du moyen de transmission vers sa position active lorsque le moyen de verrouillage occupe sa position de verrouillage. Une telle construction peut être réalisée avec des moyens mécaniques simples.

Avantageusement alors, pour faciliter la transmission des efforts, le verrou est monté mobile selon une direction radiale et le second organe de détection est formé par une surface de came.

Avantageusement alors la surface de came est ménagée sur l'extrémité radiale externe du verrou et est protégée latéralement par le boîtier. Cette disposition permet de limiter l'encombrement du boîtier tout en assurant une bonne sécurité.

Avantageusement encore, le verrou comporte une tête engagée dans une fenêtre du boîtier, la tête portant l'organe de blocage. Cette disposition permet d'assurer le maintien de l'organe de blocage lors du verrouillage du moyen de transmission. Le dispositif de sécurité ainsi obtenu est fiable avec une construction simple.

Avantageusement encore, le moyen de transmission comporte une tige montée mobile dans le boîtier contre un ressort de rappel. Cette construction est aussi particulièrement simple et économique.

Selon un mode de réalisation, l'organe de blocage est formé par un relief du verrou coopérant avec un tenon issu de la tige.

Avantageusement alors, pour faciliter la transmission des efforts, la tige est montée mobile selon une direction axiale, le premier organe de détection étant formé par l'extrémité inférieure de la tige.

Avantageusement la tige est guidée par des glissières issues du moteur. Cette disposition simplifie le mécanisme de sécurité. L'interrupteur peut également être monté sur le moteur.

Avantageusement le récipient de travail comporte une partie supérieure coopérant avec la pièce d'obturation et le boîtier réalisée dans une matière présentant des tolérances géométriques supérieures à 0,5 mm.

Le récipient de travail peut notamment être réalisé en verre ou en vitrocéramique.

L'invention sera mieux comprise à l'étude d'un exemple de réalisation, pris à titre nullement limitatif, et illustré dans les figures annexées dans lesquelles :
- la figure 1 est une vue schématique en éclaté d'un mini-hachoir électrique selon l'invention, dans laquelle une partie de l'enveloppe du boîtier a été retirée,
- la figure 2 est une vue partielle du boîtier moteur du mini-hachoir montré à la figure 1, dans laquelle le couvercle du boîtier a été retiré, le moteur étant figuré de manière schématique,
- la figure 3 est une vue schématique en position d'attente du mini-hachoir représenté à la figure 1, dans laquelle le moteur et l'outil rotatif ne sont pas représentés,
- la figure 4 est une vue schématique en position déverrouillée du mini-hachoir illustré à la figure 3,
- la figure 5 est une vue schématique en position marche du mini-hachoir illustré aux figures 3 et 4.

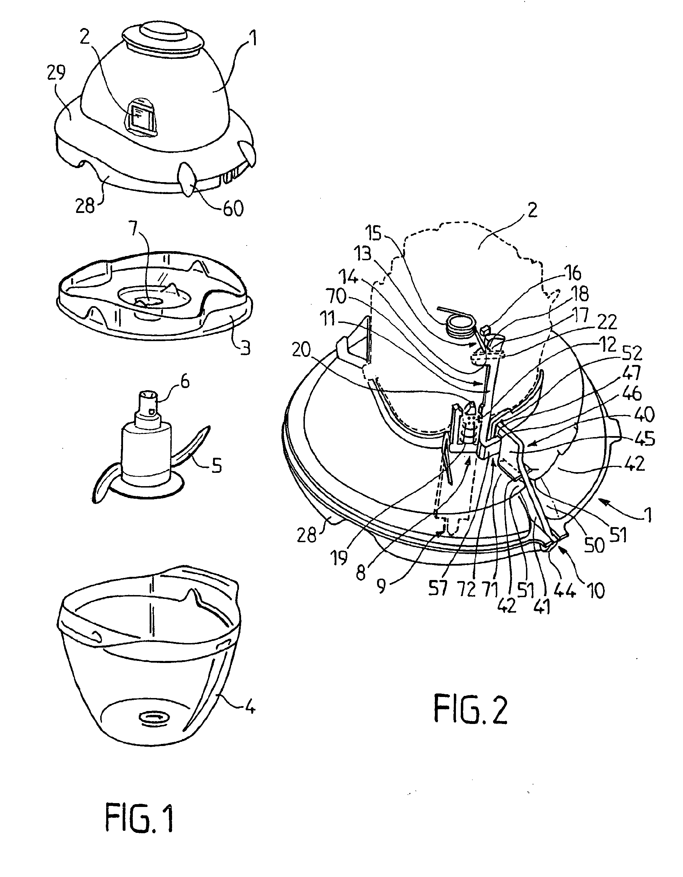

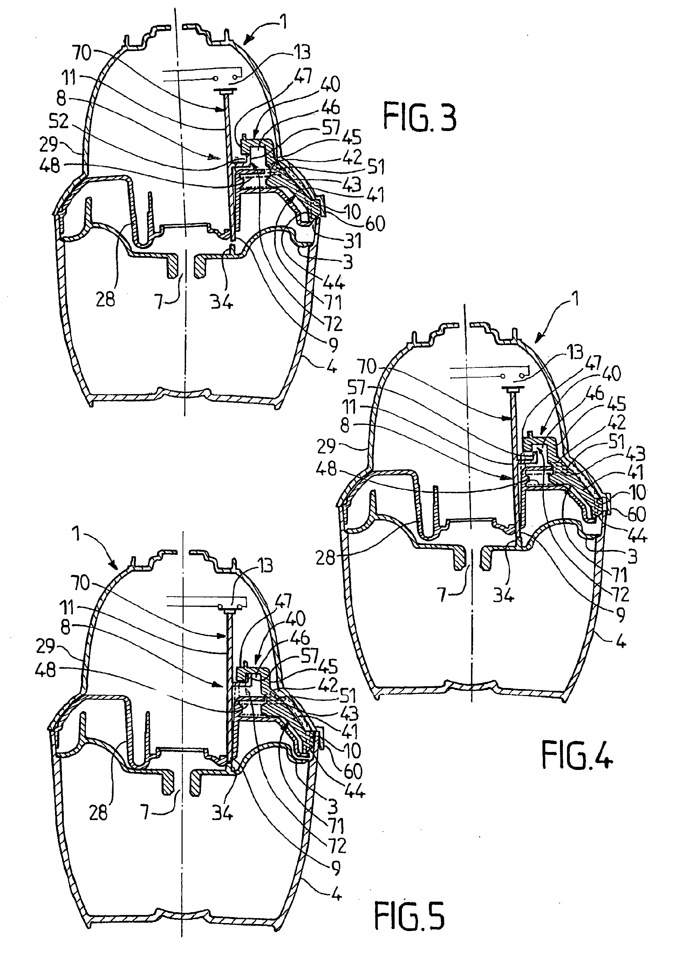

La figure 1 montre un mini-hachoir électrique comportant un boîtier de commande supérieur 1 dans lequel est disposé un moteur 2, une pièce d'obturation 3 prévue pour fermer la partie supérieure d'un récipient de travail 4 dans lequel tourne un outil rotatif 5 coupant monté sur un moyeu 6. Le boîtier 1 comporte une base 28 surmontée d'un couvercle 29, mieux visibles aux figures 3 à 5.

La pièce d'obturation 3 comporte une ouverture 7 prévue pour le passage de la partie supérieure du moyeu 6. Des moyens de commande 8 montés dans le boîtier 1 comprennent un premier organe de détection 9, prévu pour coopérer avec la pièce d'obturation 3, et un deuxième organe de détection 10, prévu pour coopérer avec le récipient de travail 4.

Tel que mieux visible à la figure 2, les moyens de commande 8 comprennent une tige de commande 11 montée coulissante par rapport au moteur 2 dans des glissières 12, 22. La tige 11 coopère avec un interrupteur 13 solidaire du boîtier 1, à savoir un bras 14 d'un ressort 15 monté sur un tenon du boîtier et susceptible de venir en contact avec une borne métallique 16. La tige 11 comporte une encoche 17 dont la partie supérieure forme une came 18. Lorsque la tige 11 est déplacée vers le haut, le bras 14 peut se rapprocher du fond de l'encoche 17 et atteindre la pièce 16 pour fermer l'interrupteur 13. La tige de commande 11 est maintenue dans la position abaissée représentée à la figure 2 par un moyen de rappel formé par un ressort 19 monté autour d'une languette 20 solidaire de la tige 11 et prenant appui sous la glissière 12. Les glissières 12, 22 sont issues de la carcasse du moteur 2. La tige 11 est mobile selon une direction axiale correspondant dans le boîtier 1 à l'axe de transmission prévu pour entraîner l'outil 5.

L'extrémité inférieure de la tige de commande 11 forme le premier organe de détection 9 prévu pour coopérer avec la pièce d'obturation 3. Tel que visible aux figures 3 à 5, l'extrémité inférieure de la tige de commande 11 sort du boîtier 1 par une ouverture ménagée dans la face inférieure de la base 28. L'extrémité inférieure de la tige de commande 11 est prévue pour coopérer avec un ergot 34 ménagé sur la face supérieure de la pièce d'obturation 3.

Un verrou 40 est monté mobile en translation selon une direction radiale sur la base 28 du boîtier 1. Le verrou 40 comporte un corps 41 agencé partiellement dans un logement 50 ménagé dans la base 28. Le corps 41 est guidé par rapport à la base 28 par deux paires de nervures 42, 43 encadrant deux nervures 51 fermant partiellement le logement 50, mieux visibles à la figure 2. Le corps 41 présente une extrémité radiale externe comportant une surface de came 44.

La surface de came 44 forme le deuxième organe de détection 10 prévu pour coopérer avec le récipient de travail 4. La surface de came 44 est protégée latéralement par le boîtier 1, l'extrémité radiale externe du corps 41 étant logée derrière un cache 60 issu du couvercle 29 du boîtier 1. La base 28 du boîtier 1 ménage avec le couvercle 29 une ouverture 31 prévue pour permettre l'actionnement de la surface de came 44 par le bord supérieur du récipient de travail 4.

Au delà des nervures 42, le corps 41 est prolongé par une tête 45 montée coulissante dans une fenêtre 52 de la base 28. La tête 45 présente une cavité inférieure 46 prévue pour recevoir un tenon 57 issu de la tige 11. La cavité 46 est prolongée radialement vers l'intérieur par un relief 47. Le tenon 57 contourne la fenêtre 52. Un ressort 48 est agencé entre la base 28 et le verrou 40 pour repousser le verrou 40 radialement vers l'extérieur contre le cache 60.

Le fonctionnement va être expliqué en références aux figures 3 à 5, dans lesquelles le moteur, l'interrupteur et l'outil ne sont pas représentés, par souci de simplicité.

La figure 3 présente l'appareil dans la position d'attente, la pièce d'obturation 3 étant en place dans le récipient de travail 4, et le boîtier 1 étant placé sur le récipient de travail 4. Le bord supérieur du récipient de travail 4 vient en contact avec la surface de came 44 appartenant au verrou 40 repoussé par le ressort 48. L'extrémité inférieure de la tige 11 n'est pas encore en contact avec l'ergot 34 de la pièce d'obturation 3. Le boîtier 1 est dans une configuration de sécurité, dans laquelle le tenon 57 de la tige 11 bute contre le relief 47 du verrou 40 repoussé par le ressort 20. La tête 45 du verrou 40 est maintenue verticalement dans la fenêtre 52 pour assurer un bon maintien du verrou 40. De ce fait, la tige 11 ne peut être repoussée pour actionner l'interrupteur 13. L'appareil ne peut pas fonctionner.

La figure 4 présente l'appareil dans une position intermédiaire du boîtier, dite position de déverrouillage. Cette position est atteinte lorsque l'utilisateur exerce une certaine pression axiale sur le boîtier 1. Le bord supérieur du récipient de travail 4 repousse la surface de came 44. Le verrou 40 est repoussé contre le ressort 48 et le relief 47 libère le tenon 57 de la tige 11. Le verrou 40 repoussé ménage un passage pour le bord supérieur du récipient de travail 4 contre la face intérieure du cache 60. L'ergot 34 de la pièce d'obturation 3 arrive en contact avec l'extrémité inférieure de la tige 11.

La figure 5 présente l'appareil dans la position marche. Cette position est atteinte lorsque l'utilisateur exerce une pression axiale encore plus forte sur le boîtier 1. Le bord supérieur du récipient de travail 4 s'insère alors entre le verrou 40 et le cache 60. Le tenon 57 engagé dans la cavité 46 permet à la tige 11 repoussée par l'ergot 34 d'actionner l'interrupteur 13. L'appareil peut alors fonctionner.

Si l'utilisateur essaie de repousser la tige 11 sans que le verrou 40 ne soit repoussé, le verrou 40 bloque la tige 11 et l'interrupteur 13 ne peut être actionné.

Grâce à la détection de la présence du récipient de travail 4 et de la pièce d'obturation 3, l'appareil selon l'invention est d'une utilisation particulièrement sûre. Grâce à l'absence de pièces de commande mobiles et/ou déformables dans le récipient 4 et dans la pièce d'obturation 3, l'appareil selon l'invention est d'une utilisation particulièrement agréable, car les pièces en contact avec les aliments peuvent être lavées sans difficultés particulières. De plus l'appareil conserve une construction compacte.

La combinaison d'un mouvement radial pour le verrou 40 et d'un mouvement axial pour la tige 11 rend la construction du dispositif de sécurité fiable et précise. La présence de la surface de came 44 permet d'obtenir pour le verrou 40 des courses importantes susceptibles de prendre en compte les dispersions géométriques du récipient de travail 4 lorsque celui ci est réalisé en verre.

Ainsi la tige 11 forme un moyen de transmission 70 susceptible de coopérer avec l'interrupteur 13. Le moyen de transmission 70 peut occuper une position passive dans laquelle l'interrupteur 13 n'autorise pas le fonctionnement de l'appareil, montrée aux figures 3 et 4, et une position active dans laquelle l'interrupteur 13 autorise le fonctionnement de l'appareil, montrée à la figure 5.

Le verrou 40 forme un moyen de verrouillage 71 pouvant occuper une position stable, dite de verrouillage, montrée à la figure 3, et une position instable dite déverrouillée, montrée aux figures 4 et 5. Le relief 47 du verrou 40 forme un organe de blocage 72 susceptible d'entraver le déplacement de la tige 11 en coopérant avec le tenon 57 de la tige 11. Ainsi le moyen de transmission 70 ne peut atteindre sa position active lorsque le moyen de verrouillage 71 occupe sa position de verrouillage, tel qu'illustré à la figure 3.

La position de verrouillage du moyen de verrouillage 71 est stable du fait de l'action du ressort 48 sur le verrou 40. La position déverrouillée du moyen de verrouillage 71 est obtenue par la coopération du récipient de travail 4 avec le deuxième organe de détection 10. La position active du moyen de transmission 70 est instable du fait de l'action du ressort 19 sur la tige 10. Cette position active est permise lorsque l'organe de blocage 72 du moyen de verrouillage 71 a libéré le moyen de transmission 70. Cette position active est obtenue lorsque le premier organe de détection 9 coopère avec le moyen de transmission 70.

A titre de variante, un autre type d'interrupteur pourrait être utilisé. Notamment, l'appareil pourrait être actionné par la pression d'un bouton de commande agencé sur le boîtier, au lieu d'une pression directe sur le boîtier. Il est également possible d'envisagé un micro-rupteur, ou microswitch, dont la partie mobile est actionnée par la tige, respectivement par le boîtier, l'enveloppe extérieure du micro-rupteur étant montée dans le boîtier, respectivement sur la tige montée dans le boîtier.

A titre de variante, le moyen de transmission et/ou le moyen de verrouillage peuvent comporter plusieurs pièces. Notamment, une pièce de transmission complémentaire peut être envisagée entre la tige 11 et l'interrupteur 13.

La présente invention n'est nullement limitée à l'exemple de réalisation décrit et à ses variantes, mais englobe de nombreuses modifications dans le cadre des revendications.

## Revendications

1. Appareil électroménager de préparation culinaire comprenant un récipient de travail (4), une pièce d'obturation (3) amovible du récipient de travail, un boîtier (1), disposé au dessus du récipient de travail, logeant un moteur (2) prévu pour entraîner en rotation un outil (5) disposé dans le récipient de travail, le moteur étant associé à des moyens de commande (8) logés dans le boîtier, les moyens de commande comportant un interrupteur (13), un premier organe de détection (9) prévu pour coopérer avec la pièce d'obturation, le premier organe de détection (9) appartenant à un moyen de transmission (70) susceptible de coopérer avec l'interrupteur (13) pour autoriser le fonctionnement de l'appareil, **caractérisé en ce que** les moyens de commande (8) logés dans le boîtier (1) comportent un deuxième organe de détection (10) prévu pour coopérer avec le récipient de travail, le deuxième organe de détection (10) appartenant à un moyen de verrouillage (71) comportant un organe de blocage (72) coopérant avec le moyen de transmission (70) lorsque le deuxième organe de détection (10) n'est pas sollicité, le moyen de verrouillage (71) étant formé par un verrou (40) monté mobile dans le boîtier (1) contre un ressort de rappel (48).

2. Appareil électroménager de préparation culinaire selon la revendication 1, **caractérisé en ce que** le moyen de transmission (70) peut occuper une position passive dans laquelle l'interrupteur (13) n'autorise pas le fonctionnement de l'appareil, et une position active instable dans laquelle l'interrupteur (13) autorise le fonctionnement de l'appareil, et **en ce que** le moyen de verrouillage (71) peut occuper une position stable dite de verrouillage et une position instable dite déverrouillée, l'organe de blocage (72) étant susceptible d'entraver le déplacement du moyen de transmission (70) vers sa position active lorsque le moyen de verrouillage (71) occupe sa position de verrouillage.

3. Appareil électroménager de préparation culinaire selon l'une des revendications 1 ou 2, **caractérisé en ce que** le verrou (40) est monté mobile selon une direction radiale et **en ce que** le second organe de détection (10) est formé par une surface de came (44).

4. Appareil électroménager de préparation culinaire selon la revendication 3, **caractérisé en ce que** la surface de came (44) est ménagée sur l'extrémité radiale externe du verrou (40) et est protégée latéralement par le boîtier (1).

5. Appareil électroménager de préparation culinaire selon l'une des revendications 1 à 4, **caractérisé en ce que** le verrou (40) comporte une tête (45) engagée dans une fenêtre (52) du boîtier (1), la tête (45) portant l'organe de blocage (72).

6. Appareil électroménager de préparation culinaire selon l'une des revendications 1 à 5, **caractérisé en ce que** le moyen de transmission (70) comporte une tige (11) montée mobile dans le boîtier (1) contre un ressort de rappel (19).

7. Appareil électroménager de préparation culinaire selon l'une des revendications 1 à 5, **caractérisé en ce que** l'organe de blocage (72) est formé par un relief (47) du verrou (40) coopérant avec un tenon (57) issu d'une tige (11) montée mobile dans le boîtier (1) contre un ressort de rappel (19), la tige (11) appartenant au moyen de transmission (70).

8. Appareil électroménager de préparation culinaire selon l'une des revendications 6 ou 7, **caractérisé en ce que** la tige (11) est montée mobile selon une direction axiale et **en ce que** le premier organe de détection (9) est formé par l'extrémité inférieure de la tige (11).

9. Appareil électroménager de préparation culinaire selon l'une des revendications 6 à 8, **caractérisé en ce que** la tige (11) est guidée par des glissières (12, 22) issues du moteur (2).

10. Appareil électroménager de préparation culinaire selon l'une des revendications 1 à 9, **caractérisé en ce que** le récipient de travail (4) comporte une partie supérieure, coopérant avec la pièce d'obturation (3) et le boîtier (1), réalisée dans une matière présentant des tolérances géométriques supérieures à 0,5 mm.

11. Appareil selon l'une des revendications 1 à 10, **caractérisé en ce que** le récipient de travail (4) est réalisé en verre ou en vitrocéramique.

## Claims

1. An electric household appliance for preparing food, the appliance comprising: a working receptacle (4); a removable closure piece (3) for closing the working receptacle; a housing (1) placed above the working receptacle; a motor (2) contained in the housing for rotating a tool (5) placed in the working receptacle; and control means (8) associated with the motor and housed in the housing, the control means comprising a switch (13), and a first detector member (9) for co-operating with the closure piece, the first detector member (9) forming part of transmission means (70) suitable for co-operating with the switch (13) to authorize operation of the appliance; the appliance being **characterized in that** the control means (8) housed in the housing (1) include a second detector member (10) for co-operating with the working receptacle, the second detector member (10) forming part of locking means (71) having a blocking member (72) co-operating with the transmission means (70) when the second detector member (10) is not engaged, the locking means (71) being formed by a latch (40) mounted to move in the housing (1) against a return spring (48).

2. An electric household appliance for preparing food according to claim 1, **characterized in that** the transmission means (70) can occupy a passive position in which the switch (13) does not authorize operation of the appliance, and an unstable, active position in which the switch (13) authorizes operation of the appliance, and **in that** the locking means (71) can occupy a "locking" position that is stable and a "unlocked" position that is unstable, the blocking member (72) being suitable for impeding displacement of the transmission means (70) towards its active position when the locking means (71) is occupying its locking position.

3. An electric household appliance for preparing food according to claim 1 or claim 2, **characterized in that** the latch (40) is mounted to move in a radial direction and **in that** the second detector member (10) is formed by a cam surface (44).

4. An electric household appliance for preparing food according to claim 3, **characterized in that** the cam surface (44) is provided on the radially outer end of the latch (40) and is protected laterally by the housing (1).

5. An electric household appliance for preparing food according to any one of claims 1 to 4, **characterized in that** the latch (40) comprises a head (45) engaged in a window (52) in the housing (1), the head (45) carrying the blocking member (72).

6. An electric household appliance for preparing food according to any one of claims 1 to 5, **characterized in that** the transmission means (70) comprises a rod (11) mounted to move in the housing (1) against a return spring (19).

7. An electric household appliance for preparing food according to any one of claims 1 to 5, **characterized in that** the blocking member (72) is formed by a portion in relief (47) of the latch (40) co-operating with a tenon (57) projecting from a rod (11) mounted to move in the housing (1) against a return spring (19), the rod (11) belonging to the transmission means (70).

8. An electric household appliance for preparing food according to claim 6 or claim 7, **characterized in that** the rod (11) is mounted to move in an axial direction, and **in that** the first detector member (9) is formed by the bottom end of the rod (11).

9. An electric household appliance for preparing food according to any one of claims 6 to 8, **characterized in that** the rod (11) is guided by slideways (12, 22) coming from the motor (2).

10. An electric household appliance for preparing food according to any one of claims 1 to 9, **characterized in that** the working receptacle (4) has a top portion co-operating with the closure piece (3) and the housing (1), and made of a material presenting geometrical tolerances better than 0.5 mm.

11. An appliance according to any one of claims 1 to 10, **characterized in that** the working receptacle (4) is made of glass or glass-ceramic.

## Patentansprüche

1. Elektrohaushaltsgerät zur Nahrungsmittelzubereitung mit einem Arbeitsbehälter (4), einem vom Arbeitsbehälter abnehmbaren Verschlussteil (3), einem Gehäuse (1), das oberhalb vom Arbeitsbehälter angeordnet ist und einen Motor (2) aufnimmt, um ein Werkzeug (5) in Drehung zu versetzen, das im Arbeitsbehälter angeordnet ist, wobei dem Motor Steuermittel (8) zugeordnet sind, die im Gehäuse angeordnet sind, wobei die Steuermittel einen Schalter (13) und ein erstes Erfassungsorgan (9) aufweisen, das zum Zusammenwirken mit dem Verschlussteil vorgesehen ist, wobei das erste Erfassungsmittel (9) zu einem Übertragungsmittel (70) gehört, das mit dem Schalter (13) zusammenwirken kann, um den Betrieb des Geräts zuzulassen, **dadurch gekennzeichnet, dass** die im Gehäuse (1) aufgenommenen Steuermittel (8) ein zweites Erfassungsorgan (10) aufweisen, das zum Zusammenwirken mit dem Arbeitsbehälter vorgesehen ist, wobei das zweite Erfassungsorgan (10) zu einem Verriegelungsmittel (71) gehört, das ein Blockierorgan (72) aufweist, das mit dem Übertragungsmittel (70) zusammenwirkt, wenn das zweite Erfassungsorgan (10) nicht beaufschlagt ist, wobei das Verriegelungsmittel (71) durch einen Riegel (40) gebildet ist, der im Gehäuse (1) gegen eine Rückstellfeder (48) beweglich angebracht ist.

2. Elektrohaushaltsgerät zur Nahrungsmittelzubereitung nach Anspruch 1, **dadurch gekennzeichnet, dass** das Übertragungsmittel (70) eine passive Stellung, in welcher der Schalter (13) den Betrieb des Geräts nicht zulässt, und eine instabile aktive Stellung, in welcher der Schalter (13) den Betrieb des Geräts zulässt, einnehmen kann, und dass das Verriegelungsmittel (71) eine stabile, sogenannte Verriegelungsstellung und eine instabile, sogenannte entriegelte Stellung einnehmen kann, wobei das Blockierungsorgan (72) die Verlagerung des Übertragungsmittels (70) zu dessen aktiver Stellung verhindern kann, wenn das Verriegelungsmittel (71) seine Verriegelungsstellung einnimmt.

3. Elektrohaushaltsgerät zur Nahrungsmittelzubereitung nach einem der Ansprüche 1 oder 2, **dadurch gekennzeichnet, dass** der Riegel (40) entlang einer radialen Richtung beweglich angebracht ist und dass das zweite Erfassungsorgan (10) durch eine Nockenfläche (44) gebildet ist.

4. Elektrohaushaltsgerät zur Nahrungsmittelzubereitung nach Anspruch 3, **dadurch gekennzeichnet, dass** die Nockenfläche (44) am radialen äußeren Ende des Riegels (40) angebracht und seitlich vom Gehäuse (1) geschützt ist.

5. Elektrohaushaltsgerät zur Nahrungsmittelzubereitung nach einem der Ansprüche 1 bis 4, **dadurch gekennzeichnet, dass** der Riegel (40) einen Kopf (45) aufweist, der in ein Fenster (52) des Gehäuses (1) eingreift, wobei der Kopf (45) das Blockierungsorgan (72) trägt.

6. Elektrohaushaltsgerät zur Nahrungsmittelzubereitung nach einem der Ansprüche 1 bis 5, **dadurch gekennzeichnet, dass** das Übertragungsmittel (70) eine Stange (11) aufweist, die im Gehäuse (1) gegen eine Rückstellfeder (19) beweglich angebracht ist.

7. Elektrohaushaltsgerät zur Nahrungsmittelzubereitung nach einem der Ansprüche 1 bis 5, **dadurch gekennzeichnet, dass** das Blockierungsmittel (72) durch eine Erhebung (47) des Riegels (40) gebildet ist, die mit einem Zapften (57) zusammenwirkt, der aus einer Stange (11) hervorgeht, die im Gehäuse (1) gegen eine Rückstellfeder (19) beweglich angebracht ist, wobei die Stange (11) zum Übertragungsmittel (70) gehört.

8. Elektrohaushaltsgerät zur Nahrungsmittelzubereitung nach einem der Ansprüche 6 oder 7, **dadurch gekennzeichnet, dass** die Stange (11) entlang einer radialen Richtung beweglich angebracht ist und dass das erste Erfassungsorgan (9) durch das untere Ende der Stange (11) gebildet ist.

9. Elektroliaushaltsgerät zur Nahrungsmittelzubereitung nach einem der Ansprüche 6 bis 8, **dadurch gekennzeichnet, dass** die Stange (11) durch Gleitschienen (12, 22) geführt ist, die aus dem Motor (2) hervorgehen.

10. Elektrohaushaltsgerät zur Nahrungsmittelzubereitung nach einem der Ansprüche 1 bis 9, **dadurch gekennzeichnet, dass** der Arbeitsbehälter (4) einen oberen Teil aufweist, der mit dem Verschlussteil (3) und dem Gehäuse (1) zusammenwirkt, wobei der obere Teil aus einem Material gebildet ist, das geometrische Toleranzen aufweist, die größer als 0,5 mm sind.

11. Gerät nach einem der Ansprüche 1 bis 10, **dadurch gekennzeichnet, dass** der Arbeitsbehälter (4) aus Glas oder Glaskeramik hergestellt ist.
